# EUROPÄISCHE PATENTSCHRIFT

(11) **EP 0 741 845 B1**
(45) Veröffentlichungstag und Bekanntmachung des Hinweises auf die Patenterteilung: **09.09.1998**
(21) Anmeldenummer: 95907586.2
(22) Anmeldetag: 23.01.1995
(51) Int. Cl.: F16K 5/06

(54) **KUGELHAHN**
BALL-VALVE TAP
ROBINET A BOISSEAU SPHERIQUE

(30) Priorität: 26.01.1994 DE 4402162
(43) Veröffentlichungstag der Anmeldung: 13.11.1996
(73) Patentinhaber: KSB Aktiengesellschaft, 67227 Frankenthal (DE)
(72) Erfinder: KRAFT, Gerd, D-76676 Graben-Neudorf (DE)
(86) Internationale Anmeldenummer: EP9500233
(87) Internationale Veröffentlichungsnummer: WO9520734

(56) Entgegenhaltungen:
- EP-A- 0 133 092
- DE-A- 4 143 306
- FR-A- 1 462 806
- US-A- 4 665 937

## Beschreibung

Die Erfindung betrifft einen Kugelhahn gemäß dem Oberbegriff von Anspruch 1.

Eine derartige Armatur ist durch die EPA 0 133 092 bekannt. Diese besteht aus einem zylindrischen Gehäuse, in dem ein Kugelhahn unter Zwischenschaltung von halbmondförmigen Lagerelementen gelagert ist. Jeweils zwei halbmondförmige Lagerelemente ergeben zusammengesetzt einen Zylinderabschnitt, der mit seiner zylindrischen Wandfläche am zylindrischen Innenteil des Gehäuses anliegt. Zwischen den beiden halbmondförmigen Lagerelementen ist eine zentrale Öffnung ausgebildet, in der das Absperrorgan drehbar gelagert ist.

An den halbmondförmigen Lagerelementen liegen beiderseits je ein Dichtungsring an. Dieses Gehäuse kann zwischen die Flansche von anzuschließenden Rohrleitungen eingeklemmt werden, so daß die Rohrleitungsflansche beim Anziehen ihrer Verbindungsschrauben gleichzeitig die Dichtungsringe des Absperrorgans gegen die halbmondförmigen Lagerelemente pressen und somit das Abschlußorgan innerhalb des Gehäuses positionieren. Diese Lösung erlaubt jedoch keine zuverlässige Funktion des Abschlußorganes, da aufgrund unterschiedlicher Toleranzen und der nicht nachprüfbaren Vorgehensweise beim Einbau eines derartigen Kugelhahnes so ungünstige Kraftverhältnisse innerhalb der Armaturen erzeugt werden können, daß die Funktion nachteilig beeinflußt werden kann. Eine Variation dieses Konstruktionsprinzips sieht den Einsatz des Absperrorgans mit zweiteiligen, halbkugelförmigen Lagerelementen in ein separates Gehäuse vor. In einem derartigen Fall erfolgt die Montage von der Gehäusedeckelseite her, wobei dann jedoch das Absperrorgan durch zwei angeformte, einander gegenüberliegende Wellenzapfen innerhalb der beiden Halbkugelhälften gelagert ist. Diese Lösung hat aber wieder ungünstige Kräfteverhältnisse zur Folge, da das Absperrorgan durch Kippmomente zusätzlich belastet ist.

Der Erfindung liegt das Problem zugrunde, für einen gattungsgemäßen, hoch belasteten Kugelhahn eine zuverlässige Lagerung zu entwickeln. Die Lösung dieses Problems sieht vor, daß die Lagerelemente als Ringelemente ausgebildet und auf ihrer zum Gehäuse weisenden Seite mit einer der Innenkontur der Gehäuseteile entsprechenden Lagerfläche versehen sind, wobei diese Lagerflächen direkt am Innenraum des Gehäuses kräfteübertragend anliegen. Somit werden die in der Geschlossenstellung oder während des Schließvorganges auf das Absperrorgan einwirkenden Kräfte vom Absperrorgan auf die Ringelemente und direkt in das Gehäuse eingeleitet. Aufgrund dieser Maßnahme kann auf zusätzliche Wellenzapfen, wie sie bei derartigen Absperrorganen beispielsweise durch die DE-OS 24 54 452 bekannt sind, grundsätzlich verzichtet werden. Damit reduziert sich der Bearbeitungsaufwand innerhalb des Gehäuses und es können zusätzliche Lagerbohrungen völlig eingespart werden. Da diese zusätzlichen Lagerstellen häufig als ein Bestandteil eines separaten Gehäusebauteiles ausgebildet sind, entfällt durch einen Verzicht darauf auch eine zusätzliche Gehäusedichtungsstelle. Mit der neuen Art der Lagerung ergeben sich sehr große Auflageflächen für die Lagerkräfte, wodurch die Lagerdrücke sehr gering gehalten werden können. Aufgrund dieser gestalterischen Maßnahme sind sehr hohe Differenzdrücke mit diesem Kugelhahn absperrbar. Die Gehäuse können mit der üblichen Aufnahme für eine den Kugelhahn betätigende Schaltwelle ausgestattet sein, wobei diese mit dem Kugelhahn sowohl einstückig als auch in geteilter Ausführung Verwendung finden kann.

Bei letzter Lösung sieht eine Ausgestaltung der Erfindung vor, daß das Gehäuse aus zwei Gehäuseteilen besteht, die im Bereich einer Trennebene, die in einer zwischen den Gehäuseflanschen und außerhalb der Drehachse liegenden Ebene ausgebildet ist, aneinanderlügen, wobei jeder Gehäuseteil mit einem kugelförmigen Innenraumteil versehen ist. Mittels dieser Maßnahme kann in jedes Gehäuseteil aus Gründen eines geringen Totraumes eine Kugelform problemlos eingearbeitet werden, so daß im montierten Zustand der Gehäuseteile ein kugelförmig oder ähnlich gestalteter Innenraum gebildet wird, an dessen Wandflächen Lagerelemente zentrierend anliegen. Bei dieser Art der Gehäuseteilung kann ein die Schaltwelle aufnehmender Gehäusebereich für die Aufnahme einer schwimmend gelagerten Schaltwelle vorgesehen werden. Bei der Montage wird dann zuerst die Schaltwelle innerhalb eines Gehäuseteiles gelagert und anschließend mit einem formschlüssig ausgebildeten Übertragungsteil mit dem Absperrorgan zusammengekoppelt. Das andere Gehäuseteil positioniert dann die Lagerelemente des Absperrorgans innerhalb des Gehäuseinnerns. Auf das Absperrorgan einwirkende Kräfte können somit auf direktestem Wege in das Gehäuse eingeleitet werden.

Nach einer anderen Ausgestaltung der Erfindung ist das Gehäuse in einer die Drehachse schneidenden Ebene geteilt, wobei jedes Gehäuseteil mit einem kugelförmigen Innenraumteil versehen ist. Die Trennebene kann hierbei oberhalb oder unterhalb einer Durchströmöffnung des Absperrorgans vorgesehen werden. Hierbei beschreibt der Begriff oberhalb denjenigen Bereich, in dem eine Lagerung für eine Schaltwelle vorgesehen ist. Danach könnte also derjenige Gehäusebereich, innerhalb dessen die Schaltwelle lagernd angeordnet ist, als Gehäuseteil mit kugelförmigem Innenraumteil ausgestattet werden. Dies ist ebenso in dem der Schaltwelle gegenüberliegenden

Gehäusebereich möglich, wodurch die Voraussetzung geschaffen wird, daß Absperrorgane mit integrierter Schaltwelle - also mit der Schaltwelle einstückig ausgebildete Absperrorgane - bequem montiert werden können.

Eine weitere Ausgestaltung der Erfindung sieht vor, daß am Absperrorgan anliegende Dichtungsringe durch elastische Mittel anpreßbar sind. Mittels dieser Maßnahme werden Verspannungen verhindert, die bei starr eingesetzten Ringen aufgrund deren Toleranzen sowie den Toleranzen der Lagersitze unter Umständen entstehen können. Die elastischen Mittel, wobei es sich um Federn oder ähnlich wirkende Gegenstände handeln kann, lassen den jeweiligen Dichtungsring mit einer gewünschten Anpressung an dem Absperrorgan anliegen, wodurch die Reibungskräfte innerhalb der Armatur beherrschbar sind.

Ein Ausführungsbeispiel der Erfindung ist in der Zeichnung dargestellt und wird im folgenden näher beschrieben.

In der Zeichnung ist ein in Offenstellung befindlicher Kugelhahn gezeigt, dessen Gehäuse aus zwei Gehäuseteilen 1, 2 besteht und die im Bereich einer Trennebene 3 aneinanderliegen. Die das Gehäuse in zwei Teile separierende Trennebene 3 liegt außerhalb der Drehachse 4 einer das Absperrorgan 5 betätigenden Schaltwelle 6. Damit wird sichergestellt, daß die Lagerung und Abdichtung 7 der Schaltwelle 6 in einem ungeteilten Bereich des hier größeren Gehäuseteiles 1 angeordnet ist. Eine Anordnung der Trennebene 3 außerhalb der Drehachse 4 vermeidet zusätzliche Dichtungsprobleme. Die Schaltwelle 6 ist innerhalb des Gehäuseteiles 1 schwimmend gelagert und durch eine formschlüssige Verbindung 8 kräfteübertragend mit dem Absperrorgan 5 verbunden. Das Absperrorgan 5 verfügt über Lagerflächen 9, 10, die als konzentrisch zur Drehachse 4 der Schaltwelle 6 angeordnete Eindrehungen im Absperrorgan 5 ausgebildet sind. Die Form der Lagerflächen kann hierbei mit den gemäß dem Stand der Technik üblichen Verfahren erzeugt werden. Diese Lagerflächen 9, 10 sind beiderseits der Durchströmöffnung 11 des Absperrorganes angebracht und dienen zur Aufnahme von Lagerelementen 12. Die Lagerelemente sind als Ringelemente ausgebildet und liegen mit einer kugelförmigen Lagerfläche 13 am kugelförmigen Innenraum 14 der Gehäuseteile 1, 2 kräfteübertragend an. Je nach Ausbildung der einzelnen Abmessungen kann sich hierbei das Absperrorgan 5 innerhalb stillstehender Lagerelemente 12 an den Lagerflächen 9, 10 drehend bewegen.

Die Trennebene 3 stellt für die Bearbeitung der Gehäuseteile 1, 2 gleichzeitig die Nullebene dar. Hiervon ausgehend werden alle Abmessungen, Spiele und Toleranzen festgelegt. Im zusammengebauten Zustand liegen die Gehäuseteile 1, 2 im Bereich der Trennebene 3 unter Zwischenschaltung einer Dichtung 15 metallisch aneinander, um keine zusätzlichen Toleranzen zu erhalten. Somit kann bei der Montage das kugelförmige Absperrorgan mit einem definierten Einbauspiel eingebaut werden. Dieses Einbauspiel ist so groß bemessen, daß auf die Armatur einwirkende Temperatur- und Druckbelastungen sowie äußere Rohrleitungskräfte das kugelförmige Absperrorgan in seiner Drehung nicht behindern können. Die Lagerelemente 12, sind hierbei so bemessen, daß sie im montierten Zustand innerhalb des Gehäuses festgelegt werden. Gegenüber dem Gehäuse führen sie keine Drehbewegung aus und das kugelförmige Absperrorgan bewegt sich innerhalb der Lagerelemente 12. Bei eventuellen Instandsetzungsarbeiten können die Lagerelemente leicht ersetzt werden. Es ist zwar auch möglich, die Lagerelemente 12 mit dem Absperrorgan 5 zu verbinden und das Absperrorgan und die Lagerelemente 12 sich relativ zu den Gehäuseteilen 1, 2 bewegen zu lassen. Dies ist aber nur vorteilhaft bei Gehäusematerialien, die ein sogenanntes Einlaufen der Lagerelemente in die Innenwandflächen der Gehäuseteile ausschließen.

Der Vorteil der vorgeschlagenen Lösung besteht in der Schaffung von sehr großen Auflageflächen für die Lagerkräfte und als Folge dessen entstehen sehr geringe Lagerdrücke. Diese Lösung ist hervorragend geeignet, große Differenzdrücke innerhalb eines Rohrleitungssystems abzusperren. Da das Absperrorgan durch die Lagerelemente 12 direkt innerhalb der Gehäuseteile 1, 2 gelagert ist, wird die Schaltwelle 6 auch nicht durch Biegemomente belastet, wodurch eine erheblich verbesserte Dichtheit gewährleistet wird. Jede gewünschte Form des Gehäuseinnern, wobei eine Kugelform 14 den geringsten Totraum ergibt, läßt sich problemlos in die Gehäuseteile 1, 2 hineinarbeiten. Bei dem hier gezeigten Ausführungsbeispiel wird für die Montage erst die Schaltwelle 6 innerhalb des Gehäuses montiert und in Geschlossenstellung gedreht. Danach wird das Absperrorgan 5 mit den Lagerelementen 12 in den Gehäuseteil 1 und die formschlüssige Verbindung 8 der Schaltwelle 6 eingeschoben und anschließend die Armatur mit dem Gehäuseteil 2 verschlossen. Die Verbindung im Bereich der Trennebene 3 kann durch übliche Flanschverbindungen und dazwischen angeordnete Dichtelemente 15 erfolgen.

Die Abdichtung der Armatur bewirkende Dichtungsringe 16, 17 sind innerhalb der Gehäuseteile 1, 2 nachgiebig gelagert, wobei elastische, federnde oder ähnlich wirkende Mittel 19, 20, die in diesem Fall als Tellerfedern ausgebildet sind, für eine dichtende Anpressung sorgen. Somit können innerhalb der Absperrarmatur genau definierte Reibungsverhältnisse aufrechterhalten werden, welche sich auch bei hohen Belastungen kaum verändern.

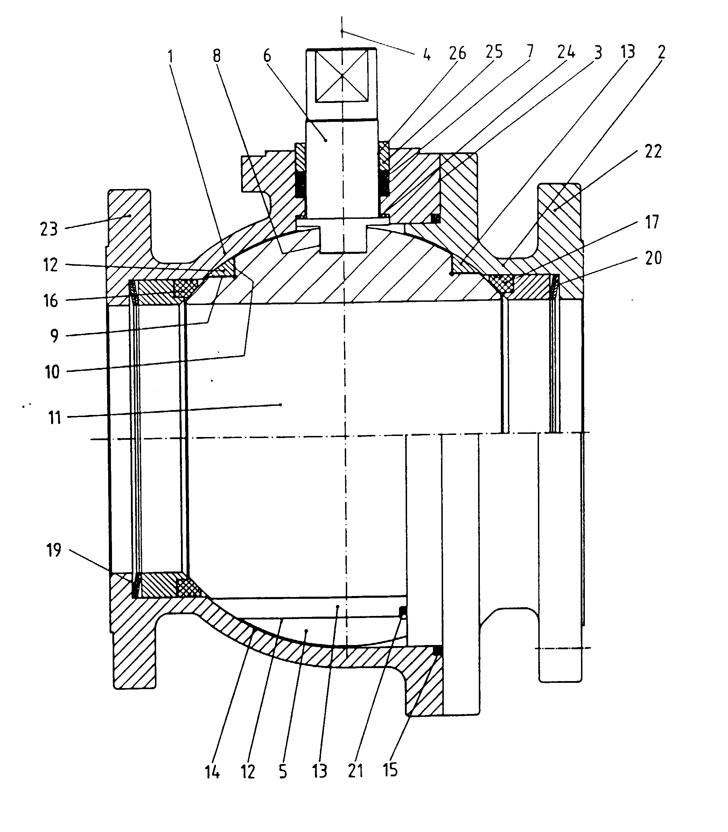

In der unteren Bildhälfte der Fig. 1 ist ein teilweise Halbschnitt der Armatur gezeigt. Dieser zeigt eine Verdrehsicherung 21 der Lagerelemente 12, die sich am Gehäuseteil 2 abstützt. Damit werden die Lagerelemente gegenüber dem Gehäuse festgelegt, so daß eine Relativbewegung nur zwischen dem Absperrorgan 5 und den Lagerelementen 12 erfolgt.

In der Geschlossenstellung der Armatur werden die auf das Absperrorgan einwirkenden Druckbelastungen auf kürzestem und nahezu geradlinigem Wege vom Absperrorgan 5 auf die Lagerflächen 9, 10, die Lagerelemente 12 und direkt in die Gehäuseteile 1 oder 2 eingeleitet. Durch die formschlüssige Verbindung 8 zwischen dem Absperrorgan 5 und der Schaltwelle 6 findet eine Entkoppelung dieser beiden Teile statt, wodurch die Schaltwelle 6 biegemomentfrei innerhalb des Gehäuseteiles 1 gelagert ist. Diese Maßnahme verbessert die Dichtheit der gesamten Armatur und dient der Reduzierung der Antriebskräfte.

Die Trennebene 3 kann selbstverständlich auch anders gelegt werden, beispielsweise horizontal. Jedoch müßte in einem derartigen Fall das Gehäuse etwas länger ausgebildet werden, damit das kugelförmige Absperrorgan 5 in seiner Gesamtheit in den Gehäusebereich zwischen den Flanschen 22, 23 eingeführt werden kann. Die Trennebene 3 kann in bezug auf die Zeichnung bei senkrechtem Verlauf um 90° gedreht und damit parallel zur Zeichenebene angebracht werden. Eine derartige konstruktive Gestaltung ist ohne weiteres möglich und kann im Einzelfall sinnvoll sein, wobei jedoch die vorteilhafteste Ausführungsform in der Zeichnung dargestellt ist, da sich dabei die kürzeste Baulänge ergibt.

## Patentansprüche

1. Kugelhahn mit einem Gehäuse in mehrteiliger Ausbildung, einem darin gelagerten kugelförmigen Absperrorgan (5), wobei in dem Absperrorgan (5) konzentrisch zur Drehachse (4) angeordnete Lagerflächen (9, 10) beiderseits einer Durchströmöffnung (11) angeordnet sind und am Gehäuse (1, 2) anliegende Lagerelemente (12) in die Lagerflächen (9, 10) eingreifen, **dadurch gekennzeichnet**, daß die Lagerelemente (12) als Ringelemente ausgebildet und auf ihrer zum Gehäuse weisenden Seite mit einer der Innenkontur der Gehäuseteile entsprechenden Lagerfläche (13) versehen sind und daß diese Lagerflächen (13) direkt am Innenraum (14) des Gehäuses kräfteübertragend anliegen.

2. Kugelhahn nach Anspruch 1, dadurch gekennzeichnet, daß das Gehäuse (1, 2) in einer außerhalb der Drehachse (4) liegenden Trennebene (3) geteilt ausgebildet ist, wobei jeder Gehäuseteil mit einem kugelförmigen Innenraumteil versehen ist.

3. Kugelhahn nach Anspruch 1, dadurch gekennzeichnet, daß das Gehäuse (1, 2) in einer die Drehachse (4) schneidenden Ebene geteilt ist, wobei jeder Gehäuseteil mit einem kugelförmigen Innenraumteil versehen ist.

4. Kugelhahn nach den Ansprüchen 1, 2 oder 3 dadurch gekennzeichnet, daß in den Gehäuseteilen (1, 2) geführte, am Absperrorgan (5) anliegende Dichtungsringe (16, 17) durch elastische, federnde oder ähnliche Mittel (19, 20) anpreßbar sind.

## Claims

1. Ball valve having a housing of multipart design and a spherical obturator (5) that is mounted therein, bearing surfaces (9, 10) being arranged in the obturator (5), concentrically with respect to the axis of rotation (4) and on both sides of a flow opening (11), and bearing elements (12) that rest on the housing (1, 2) engaging in the bearing surfaces (9, 10), characterized in that the bearing elements (12) are designed as annular elements and, on their side facing the housing, are provided with a bearing surface (13) that corresponds to the inner contour of the housing parts, and in that these bearing surfaces (13) rest directly, with transmission of force, on the inner chamber (14) of the housing.

2. Ball valve according to Claim 1, characterized in that the housing (1, 2) is designed to be divided in a parting plane (3) located outside the axis of rotation (4), each housing part being provided with a spherical inner chamber part.

3. Ball valve according to Claim 1, characterized in that the housing (1, 2) is divided in a plane intersecting the axis of rotation (4), each housing part being provided with a spherical inner chamber part.

4. Ball valve according to Claim 1, 2 or 3, characterized in that sealing rings (16, 17) which are guided on the housing parts (1, 2) and rest on the obturator (5) may be pressed on by elastic, resilient or similar means (19, 20).

## Revendications

1. Robinet à boisseau sphérique pourvu d'un corps de configuration en plusieurs parties, d'un organe d'arrêt (5) de forme sphérique monté dans celui-ci, des surfaces de palier (9, 10) disposées dans l'organe d'arrêt (5) concentriquement à l'axe de rotation (4) étant disposées de part et d'autre d'un orifice d'écoulement (11), et des éléments de palier (12) reposant contre le corps (1, 2) venant s'engrener dans les surfaces de palier (9, 10), **caractérisé en ce que** les éléments de palier (12) sont formés en tant qu'éléments annulaires et sont pourvus, du côté du corps, d'une face de palier (13) correspondant au contour interne de la partie du corps, et en ce que ces faces de palier (13) reposent directement contre l'espace interne (14) du corps en transmettant les forces.

2. Robinet à boisseau sphérique selon la revendication 1, caractérisé en ce que le corps (1, 2) est formé de manière séparée suivant un plan de séparation (3) se trouvant en dehors de l'axe de rotation (4), chaque partie de corps étant pourvue d'une partie d'espace interne de forme sphérique.

3. Robinet à boisseau sphérique selon la revendication 1, caractérisé en ce que le corps (1, 2) est divisé suivant un plan coupant l'axe de rotation (4), chaque partie de corps étant pourvue d'une partie d'espace interne de forme sphérique.

4. Robinet à boisseau sphérique selon les revendications 1, 2 ou 3, caractérisé en ce que des bagues d'étanchéité (16, 17), introduites dans les parties de corps (1, 2), reposant contre l'organe d'arrêt (5), peuvent être pressées par des moyens élastiques, à ressort ou similaires (19, 20).
